# EUROPEAN PATENT SPECIFICATION

(11) **EP 2 943 670 B1**
(45) Date of publication and mention of the grant of the patent: **22.01.2020**
(21) Application number: 13870617.1
(22) Date of filing: 04.06.2013
(51) Int. Cl.: F02C 7/20, B64D 27/12

(54) **TWO SPOOL GAS GENERATOR WITH MOUNT RING**
ZWEISPULENGASGENERATOR MIT HALTERING
GÉNÉRATEUR DE GAZ DOUBLE CORPS AVEC ANNEAU DE MONTAGE

(30) Priority: 10.01.2013 US 201361751027 P
(43) Date of publication of application: 18.11.2015
(73) Proprietor: United Technologies Corporation, Farmington, CT 06032 (US)
(72) Inventor: SUCIU, Gabriel L., Glastonbury, Connecticut 06033 (US); CHANDLER, Jesse M., South Windsor, Connecticut 06074 (US)
(74) Representative: Dehns
(86) International application number: PCT/US2013/044022
(87) International publication number: WO 2014/109787

(56) References cited:
- EP-A1- 1 053 938
- EP-A2- 2 103 516
- JP-A- H0 763 659
- US-A- 4 817 382
- US-A- 5 927 644
- US-A1- 2011 142 648
- US-A1- 2011 311 361
- US-A1- 2011 311 361
- US-A1- 2012 023 898
- US-A1- 2012 171 018
- US-A1- 2012 175 462

## Description

### BACKGROUND

This application relates to a two spool gas generator for a gas turbine engine and a propulsor drive.

Conventional gas turbine engines typically include a fan section, a compressor section and a turbine section. There are two general known architectures. In one architecture, a low speed spool includes a low pressure turbine driving a low pressure compressor and also driving a fan. A gear reduction may be placed between the spool and the fan in some applications. There are also direct drive engines.

Another known architecture includes a third spool with a third turbine being positioned downstream of the low pressure turbine and driving the fan. The three spools have shafts connecting a turbine to the driven element, and the three shafts are mounted about each other.

All of these architectures raise challenges.

US 2011/0311361 A1 discloses a prior art gas turbine engine according to the preamble of claim 1.

US 2012/0175462 A1 discloses a prior art aircraft engine mounting structure, assembly comprising said structure, and associated aircraft.

US 4, 817, 382 discloses a prior art turboprop propulsion apparatus.

EP 2 103 516 A2 discloses a prior art mounting system for a gas turbine engine.

US 2012/0171018 A1 discloses a prior art gas turbine engine compressor arrangement.

### SUMMARY

According to the present invention there is provided a gas turbine engine as set forth in claim 1.

In another embodiment according to any of the previous embodiments, the propulsor turbine is mounted within the turbine case.

In another embodiment according to any of the previous embodiments, the mount ring is provided with a mount plate.

In another embodiment according to any of the previous embodiments, the mount plate is connected to the mount ring by a plurality of pivotally connected links.

In another embodiment according to any of the previous embodiments, two of the links are positioned on opposed circumferential sides of the mount plate.

In another embodiment according to any of the previous embodiments, the mount plate is pivotally attached to the mount ring.

In another embodiment according to any of the previous embodiments, a torque link is pivotally connected to the mount plate and to the mount ring.

In another embodiment according to any of the previous embodiments, the first turbine rotor drives a first compressor rotor through the first shaft, and the second turbine rotor drives a second compressor rotor through the second shaft.

In another embodiment according to any of the previous embodiments, the second compressor rotor has a first overall pressure ratio at cruise. The first compressor rotor has a second overall pressure ratio at cruise, with the ratio of the first overall pressure ratio to the second overall pressure ratio being greater than or equal to about 2.0.

In another embodiment according to any of the previous embodiments, the ratio of the first overall pressure ratio to the second overall pressure ratio is greater than or equal to about 3.0.

In another embodiment according to any of the previous embodiments, the ratio of the first overall pressure ratio to the second overall pressure ratio is less than or equal to about 8.0.

In another embodiment according to any of the previous embodiments, the first turbine rotor includes a single turbine stage.

In another embodiment according to any of the previous embodiments, the second turbine rotor includes two stages.

In another embodiment according to any of the previous embodiments, the second compressor rotor includes eight stages.

In another embodiment according to any of the previous embodiments, the first compressor rotor includes six stages.

These and other features may be best understood from the following drawings and specification.

### BRIEF DESCRIPTION OF THE DRAWINGS

Figure 1 schematically shows a three spool gas turbine engine.
Figure 2A schematically shows an engine.
Figure 2B shows an engine mount structure.
Figure 3 shows details of the engine mount.

### DETAILED DESCRIPTION

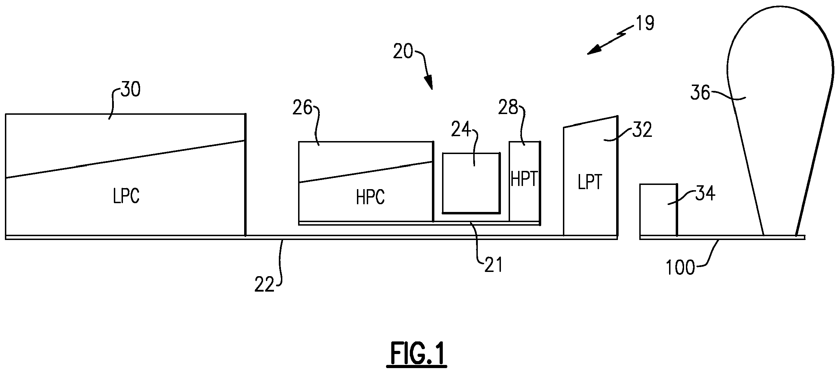

A gas turbine engine 19 is schematically illustrated in Figure 1. A core engine, or gas generator 20, includes high speed shaft 21 is part of a high speed spool along with a high pressure turbine rotor 28 and a high pressure compressor rotor 26. A combustion section 24 is positioned intermediate the high pressure compressor rotor 26 and the high pressure turbine rotor 28. A shaft 22 of a low pressure spool connects a low pressure compressor rotor 30 to a low pressure turbine rotor 32.

Engine 19 also includes a free turbine 34 is shown positioned downstream of the low pressure turbine rotor 32 and serves to drive a propeller 36.

Various embodiments are within the scope of the disclosed engine. These include embodiments in which:
a good deal more work is done by the low pressure compressor rotor 30 than by the high pressure compressor rotor 26;
the combination of the low pressure compressor rotor 30 and high pressure compressor rotor 26 provides an overall pressure ratio equal to or above about 30;
the low pressure compressor rotor 30 includes eight stages and has a pressure ratio at cruise conditions of 14.5; in this embodiment, the high pressure compressor rotor 26 had six stages and an overall pressure ratio of 3.6 at cruise;
a ratio of the low pressure compressor pressure ratio to the high pressure compressor ratio is greater than or equal to about 2.0, and less than or equal to about 8.0;
more narrowly, the ratio of the two pressure ratios is between or equal to about 3.0 and less than or equal to about 8; and
even more narrowly, the ratio of the two pressure ratios is greater than about 3.5.

In the above embodiments, the high pressure compressor rotor 26 will rotate at slower speeds than in the prior art. If the pressure ratio through the fan and low pressure compressor are not modified, this could result in a somewhat reduced overall pressure ratio. The mechanical requirements for the high pressure spool, in any event, are relaxed.

With the lower compressor, the high pressure turbine rotor 28 may include a single stage. In addition, the low pressure turbine rotor 32 may include two stages.

By moving more of the work to the low pressure compressor rotor 30, there is less work being done at the high pressure compressor rotor 26. In addition, the temperature at the exit of the high pressure compressor rotor 26 may be higher than is the case in the prior art, without undue challenges in maintaining the operation.

Variable vanes are less necessary for the high pressure compressor rotor 26 since it is doing less work. Moreover, the overall core size of the combined compressor rotors 30 and 26 is reduced compared to the prior art.

The engine 19 has what may be called a propulsor turbine 34 which is axially downstream of the low pressure turbine rotor 32. Further, the high pressure spool radially surrounds the low pressure spool, but neither of the spools surrounds the propulsor turbine, nor the shaft 100 connecting the propulsor turbine to the propeller 36. In this sense, the propulsor rotor is separate from the gas generator portion of the engine.

The disclosed engine architecture creates a smaller core engine and yields higher overall pressure ratios and, therefore, better fuel consumption. Further, uncoupling the low pressure turbine 32 from driving prop 36 enables it to run at a lower compressor surge margin, which also increases efficiency. Moreover, shaft diameters can be decreased and, in particular, for the diameter of the low pressure shafts as it is no longer necessary to drive the prop 36 through that shaft.

In the prior art, the ratio of the low pressure compressor pressure ratio to the high pressure compressor ratio was generally closer to .1 to .5. Known three spool engines have a ratio of the low pressure compressor pressure ratio to the high pressure compressor ratio of between .9 and 3.0.

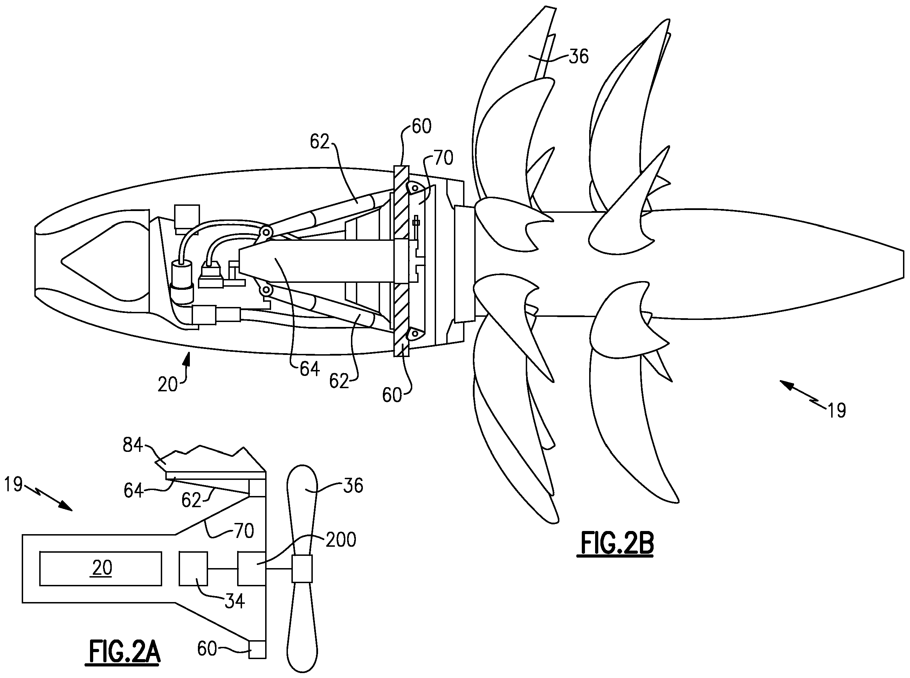

With the very small diameter core engine 20, there will be challenges in mounting the engine 19 to an aircraft. In particular, if the engine 19 was mounted as in the prior art, at front and rear locations, there would be challenges from so-called "backbone bending" due to the small diameter. Thus, as shown in Figure 2A, a mount ring 60 is secured to a turbine case 70 that is downstream of the core engine 20. The turbine case 70 may also receive the propulsor turbine 34 and the gear reduction 200. The propellers 36 are downstream and beyond the turbine case. The ring 60 supplies the sole mount plane for the engine 19. A plate 64 extends forwardly from the ring and includes a plurality of struts, one of which, 62, is illustrated in Figure 2A. An aircraft body 84 is shown schematically and is secured to the plate 64.

As shown in Figure 2B, there is a pair of struts 62 extending in opposed lateral directions and pivotally connect between the plate 64 and the ring 60.

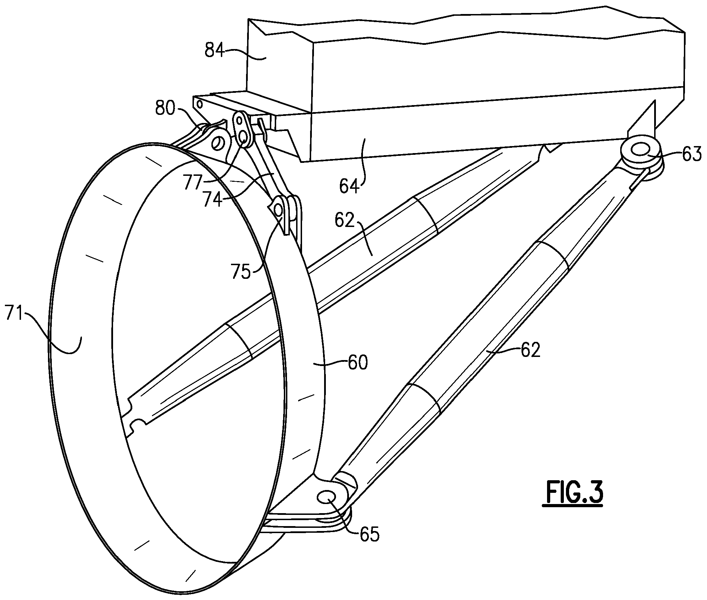

As shown in Figure 3, the plate 64 is secured to aircraft body at 84. The ring 60 has an inner surface 71 that will surround the turbine case 70 and be secured to the turbine case. Pivot point 74 and 75 also secure a torque link between the plate 64 and the ring 60. Both struts 62 are shown pivotally attached at 63 to the plate 64 and pivotally attached at 65 to the ring 60. Further, the plate 64 is itself pivotally attached at 80 to the ring. The ring 60 and plate 64 provide a cantilever mount for the engine 19.

Although an embodiment of this invention has been disclosed, a worker of ordinary skill in this art would recognize that certain modifications would come within the scope of this disclosure. For that reason, the following claims should be studied to determine the true scope and content of the invention.

## Claims

1. A gas turbine engine (19) comprising:
a first shaft (21) including a first turbine rotor (28), a second shaft (22) including a second turbine rotor (32) disposed downstream of said first turbine rotor (28); and
a third shaft (100) including a propulsor turbine (34), positioned downstream of said second turbine rotor (32), for driving a propeller (36);
wherein a turbine case (70) is positioned intermediate said second turbine rotor (32) and said propeller (36);
**characterised in that**:
said gas turbine engine (19) further comprises a mount ring (60) secured between said second turbine rotor (32) and said propeller (36) and said mount ring (60) is secured to an outer surface of said turbine case (70).

2. The gas turbine engine (19) as set forth in claim 1, wherein said propulsor turbine (34) is mounted within said turbine case (70).

3. The gas turbine engine (19) as set forth in claim 1 or 2, wherein said mount ring (60) is provided with a mount plate (64).

4. The gas turbine engine (19) as set forth in claim 3 wherein said mount plate (64) is connected to said mount ring (60) by a plurality of pivotally connected links (62, 74, 80).

5. The gas turbine engine (19) as set forth in claim 4, wherein two of said links (62) are positioned on opposed circumferential sides of said mount plate (64).

6. The gas turbine engine (19) as set forth in any of claims 3 to 5, wherein said mount plate (64) is pivotally attached to said mount ring (60).

7. The gas turbine engine (19) as set forth in claim 6, wherein a torque link (74) is pivotally connected to said mount plate (64) and to said mount ring (60).

8. The gas turbine engine (19) as set forth in any preceding claim, wherein said first turbine rotor (28) drives a first compressor rotor (26) through said first shaft (21), and said second turbine rotor (32) drives a second compressor rotor (30) through said second shaft (22).

9. The gas turbine engine (19) as set forth in claim 8, wherein said second compressor rotor (30) has a first overall pressure ratio at cruise, and said first compressor rotor (26) has a second overall pressure ratio at cruise, with the ratio of said first overall pressure ratio to said second overall pressure ratio being greater than or equal to about 2.0, for example greater than or equal to about 3.0.

10. The gas turbine engine (19) as set forth in claim 9, wherein said ratio of said first overall pressure ratio at cruise to said second overall pressure ratio at cruise being less than or equal to about 8.0.

11. The gas turbine engine (19) as set forth in any preceding claim, wherein said first turbine rotor (28) includes a single turbine stage.

12. The gas turbine engine (19) as set forth in any preceding claim, wherein said second turbine rotor (32) includes two stages.

13. The gas turbine engine (19) as set forth in any of claims 8 to 12, wherein said second compressor rotor (30) includes eight stages.

14. The gas turbine engine (19) as set forth in any of claims 8 to 13, wherein said first compressor rotor (26) includes six stages.

## Patentansprüche

1. Gasturbinentriebwerk (19), das Folgendes umfasst:
eine erste Welle (21), die einen ersten Turbinenrotor (28) einschließt, eine zweite Welle (22), die einen zweiten Turbinenrotor (32) einschließt, der stromabwärts des ersten Turbinenrotors (28) angeordnet ist; und
eine dritte Welle (100), die eine Schubturbine (34) einschließt, die stromabwärts des zweiten Turbinenrotors (32) zum Antreiben eines Propellers (36) positioniert ist;
wobei ein Turbinengehäuse (70) zwischen dem zweiten Turbinenrotor (32) und dem Propeller (36) positioniert ist;
**dadurch gekennzeichnet, dass**:
das Gasturbinentriebwerk (19) ferner einen Haltering (60) umfasst, der zwischen dem zweiten Turbinenrotor (32) und dem Propeller (36) gesichert ist, und wobei der Haltering (60) an einer Außenfläche des Turbinengehäuses (70) gesichert ist.

2. Gasturbinentriebwerk (19) nach Anspruch 1, wobei die Schubturbine (34) innerhalb des Turbinengehäuses (70) befestigt ist.

3. Gasturbinentriebwerk (19) nach Anspruch 1 oder 2, wobei der Haltering (60) mit einer Halterungsplatte (64) versehen ist.

4. Gasturbinentriebwerk (19) nach Anspruch 3, wobei die Halterungsplatte (64) mit dem Haltering (60) durch eine Vielzahl von schwenkbar verbundenen Verbindungen (62, 74, 80) verbunden ist.

5. Gasturbinentriebwerk (19) nach Anspruch 4, wobei zwei der Verbindungen (62) auf gegenüberliegenden Umfangsseiten der Halterungsplatte (64) positioniert sind.

6. Gasturbinentriebwerk (19) nach einem der Ansprüche 3 bis 5, wobei die Halterungsplatte (64) schwenkbar an dem Haltering (60) angebracht ist.

7. Gasturbinentriebwerk (19) nach Anspruch 6, wobei eine Drehmomentverbindung (74) schwenkbar mit der Halterungsplatte (64) und mit dem Haltering (60) verbunden ist.

8. Gasturbinentriebwerk (19) nach einem der vorhergehenden Ansprüche, wobei der erste Turbinenrotor (28) einen ersten Verdichterrotor (26) durch die erste Welle (21) antreibt, und der zweite Turbinenrotor (32) einen zweiten Verdichterrotor (30) durch die zweite Welle (22) antreibt.

9. Gasturbinentriebwerk (19) nach Anspruch 8, wobei der zweite Verdichterrotor (30) ein erstes Gesamtdruckverhältnis im Flug aufweist, und wobei der erste Verdichterrotor (26) ein zweites Gesamtdruckverhältnis im Flug aufweist, wobei das Verhältnis des ersten Gesamtdruckverhältnisses zu dem zweiten Gesamtdruckverhältnis größer als oder gleich etwa 2,0, zum Beispiel größer als oder gleich etwa 3,0 ist.

10. Gasturbinentriebwerk (19) nach Anspruch 9, wobei das Verhältnis des ersten Gesamtdruckverhältnisses im Flug zu dem zweiten Gesamtdruckverhältnis im Flug weniger als oder gleich etwa 8,0 ist.

11. Gasturbinentriebwerk (19) nach einem der vorhergehenden Ansprüche, wobei der erste Turbinenrotor (28) eine einzelne Turbinenstufe einschließt.

12. Gasturbinentriebwerk (19) nach einem der vorhergehenden Ansprüche, wobei der zweite Turbinenrotor (32) zwei Stufen einschließt.

13. Gasturbinentriebwerk (19) nach einem der Ansprüche 8 bis 12, wobei der zweite Verdichterrotor (30) Stufen einschließt.

14. Gasturbinentriebwerk (19) nach einem der Ansprüche 8 bis 13, wobei der erste Verdichterrotor (26) sechs Stufen einschließt.

## Revendications

1. Moteur à turbine à gaz (19) comprenant :
un premier arbre (21) comprenant un premier rotor de turbine (28), un deuxième arbre (22) comprenant un second rotor de turbine (32) disposé en aval dudit premier rotor de turbine (28) ; et
un troisième arbre (100) comportant une turbine de propulseur (34), positionnée en aval dudit second rotor de turbine (32), pour entraîner une hélice (36) ;
dans lequel un carter de turbine (70) est positionné entre ledit second rotor de turbine (32) et ladite hélice (36) ;
**caractérisé en ce que** :
ledit moteur à turbine à gaz (19) comprend en outre un anneau de montage (60) fixé entre ledit second rotor de turbine (32) et ladite hélice (36) et ledit anneau de montage (60) est fixé à une surface extérieure dudit carter de turbine (70).

2. Moteur à turbine à gaz (19) selon la revendication 1, dans lequel ladite turbine de propulseur (34) est montée à l'intérieur dudit carter de turbine (70).

3. Moteur à turbine à gaz (19) selon la revendication 1 ou 2, dans lequel ledit anneau de montage (60) est pourvu d'une plaque de montage (64).

4. Moteur à turbine à gaz (19) selon la revendication 3, dans lequel ladite plaque de montage (64) est reliée audit anneau de montage (60) par une pluralité de liaisons reliées de manière pivotante (62, 74, 80).

5. Moteur à turbine à gaz (19) selon la revendication 4, dans lequel deux desdites liaisons (62) sont positionnées sur des côtés circonférentiels opposés de ladite plaque de montage (64) .

6. Moteur à turbine à gaz (19) selon l'une quelconque des revendications 3 à 5, dans lequel ladite plaque de montage (64) est fixée de manière pivotante audit anneau de montage (60) .

7. Moteur à turbine à gaz (19) selon la revendication 6, dans lequel une liaison de couple (74) est reliée de manière pivotante à ladite plaque de montage (64) et audit anneau de montage (60).

8. Moteur à turbine à gaz (19) selon une quelconque revendication précédente, dans lequel ledit premier rotor de turbine (28) entraîne un premier rotor de compresseur (26) à travers ledit premier arbre (21), et ledit second rotor de turbine (32) entraîne un second rotor de compresseur (30) à travers ledit deuxième arbre (22).

9. Moteur à turbine à gaz (19) selon la revendication 8, dans lequel ledit deuxième rotor de compresseur (30) a un premier rapport de pression global en croisière, et ledit premier rotor de compresseur (26) a un deuxième rapport de pression global en croisière, avec le rapport dudit premier rapport de pression global audit second rapport de pression global étant supérieur ou égal à environ 2,0, par exemple supérieur ou égal à environ 3,0.

10. Moteur à turbine à gaz (19) selon la revendication 9, dans lequel ledit rapport dudit premier rapport de pression global en croisière audit second rapport de pression global en croisière est inférieur ou égal à environ 8,0.

11. Moteur à turbine à gaz (19) selon une quelconque revendication précédente, dans lequel ledit premier rotor de turbine (28) comprend un seul étage de turbine.

12. Moteur à turbine à gaz (19) selon une quelconque revendication précédente, dans lequel ledit second rotor de turbine (32) comprend deux étages.

13. Moteur à turbine à gaz (19) selon l'une quelconque des revendications 8 à 12, dans lequel ledit deuxième rotor de compresseur (30) comprend huit étages.

14. Moteur à turbine à gaz (19) selon l'une quelconque des revendications 8 à 13, dans lequel ledit premier rotor de compresseur (26) comprend six étages.
